# EUROPÄISCHE PATENTSCHRIFT

(11) **EP 1 320 979 B1**
(45) Veröffentlichungstag und Bekanntmachung des Hinweises auf die Patenterteilung: **09.02.2005**
(21) Anmeldenummer: 01982117.2
(22) Anmeldetag: 17.09.2001
(51) Int. Cl.: H04L 29/14, H04L 12/40, H04L 12/24

(54) **VERFAHREN UND VORRICHTUNG ZUR ERMITTLUNG DER NETZTOPOLOGIE EINES BUSSYSTEMS**
METHOD AND DEVICE FOR ESTABLISHING THE NETWORK TOPOLOGY OF A BUS SYSTEM
PROCEDE ET DISPOSITIF POUR DETERMINER LA TOPOLOGIE DE RESEAU D'UN SYSTEME DE BUS

(30) Priorität: 29.09.2000 DE 10048745
(43) Veröffentlichungstag der Anmeldung: 25.06.2003
(73) Patentinhaber: SIEMENS AKTIENGESELLSCHAFT, 80333 München (DE)
(72) Erfinder: SCHUSTER, Armin, 90427 Nürnberg (DE)
(86) Internationale Anmeldenummer: PCT/DE2001/003572
(87) Internationale Veröffentlichungsnummer: WO 2002/028061

(56) Entgegenhaltungen:
- KNUTZ O: "ECHOMESSTECHNIK MACHT LAN TRANSPARENT" NTZ NACHRICHTENTECHNISCHE ZEITSCHRIFT, VDE VERLAG GMBH. BERLIN, DE, Bd. 47, Nr. 4, 1. April 1994 (1994-04-01), Seiten 242-246, XP000443232 ISSN: 0027-707X

## Beschreibung

Die Erfindung bezieht sich auf ein Verfahren zur Ermittlung der Netztopologie eines Bussystems mit einer Anzahl von Busteilnehmern, die an untereinander verbundenen Bussegmenten einer Busleitung angeordnet sind. Sie bezieht sich weiter auf eine Vorrichtung zur Durchführung des Verfahrens.

Ein Bussystem oder Feldbus umfasst innerhalb eines komplexen Netzwerkes mit einer Anzahl von Bussegmenten eine Vielzahl von Busteilnehmern in Form von Feldgeräten, wie z. B. Sensoren, Aktoren, speicherprogrammierbaren Steuerungen und Leitstationen. So umfaßt beispielsweise das sogenannte PROFIBUS DP-Netzwerk üblicherweise bis zu 127 Busteilnehmer, denen Teilnehmeradressen von 0 bis 126 zugeordnet werden können. Dabei können an einem Bussegment als Leitungsstück einer Busleitung bis zu 32 Netzkomponenten als Busteilnehmer angeschlossen sein.

Die Leitungslänge eines einzelnen Bussegments ist - abhängig von der sogenannten Baudrate - begrenzt. Diese gibt die über das Bussegment übermittelbare Datenrate an. Bei einer üblichen Datenrate von 12M Baud = 12 . 10⁶Bit/s folgt, dass 1Bit gleich 83ns lang ist. Innerhalb des Netzwerkes werden die einzelnen Bussegmente mittels Leitungstreibern oder sogenannten Repeatern verbunden, die zur Realisierung von Verzweigungen im Feldbus oder Netzwerk dienen. Dabei sollte die Netztopologie des Bussystems bekannt sein, die durch die Anordnung, d. h. durch die Reihenfolge und den relativen Abstand der Busteilnehmer an den einzelnen Bussegmenten (Bussegmenttopologie) und durch die Verschaltung der Bussegmente untereinander gegeben ist.

Der Erfindung liegt daher die Aufgabe zugrunde, ein besonders geeignetes Verfahren zur automatischen Ermittlung der Netztopologie auch eines komplexen Bussystems anzugeben. Darüber hinaus soll eine zur Durchführung des Verfahrens besonders geeignete Vorrichtung angegeben werden.

Bezüglich des Verfahrens wird diese Aufgabe erfindungsgemäß gelöst durch die Merkmale des Anspruchs 1. Zweckmäßige Weiterbildungen dieses Verfahrens sind Gegenstand der auf diesen rückbezogenen Unteransprüche.

Bezüglich der Vorrichtung wird die genannte Aufgabe erfindungsgemäß gelöst durch die Merkmale des Anspruchs 7. Vorteilhafte Ausgestaltungen sind Gegenstand der auf diesen rückbezogenen Unteransprüche.

Die Erfindung geht dabei von der Erkenntnis aus, dass bei einem Busteilnehmer mit abschaltbarem Sender die Sender-Empfänger-Kombination bei deaktiviertem Sender einerseits derart hochohmig ist, dass diese keine Übertragungsstörung auf der Busleitung verursacht, andererseits jedoch bei aktiviertem Sender niederohmig ist. Ein sendender Busteilnehmer verringert dabei seinen Innenwiderstand von unendlich (∞) auf etwa 40Ω mit der Folge einer lokalen Änderung des Wellenwiderstandes der Busleitung des jeweiligen Bussegmentes, an dem dieser sendende Busteilnehmer angeschlossen ist. Wird nun während des Sendens eines Busteilnehmers ein Messimpuls oder -signal auf die Busleitung gegeben, so wird dieser Impuls bzw. dieses Signal vom sendenden Busteilnehmer reflektiert. Diese Reflexion wiederum kann nach dem Prinzip der Reflexionsmessung detektiert werden. Ein nach dem Prinzip der Reflexionsmessung arbeitendes Verfahren zur Lokalisierung eines Kurzschlusses oder eines Kabelbruches in einem Zweidraht-Bus-System ist z. B. aus der DE 197 26 539 A1 bekannt.

Zur Durchführung des erfindungsgemäßen Verfahrens werden im Bussystem um eine zusätzliche Funktion erweiterte Repeater eingesetzt, die nachfolgend als Diagnoserepeater bezeichnet werden. Diese weisen zusätzlich zur in der Verbindung einzelner Bussegmente bestehenden Repeaterfunktion eine auf dem Prinzip der Reflexionsmessung basierende Diagnosefunktion auf. Werden beim Netzaufbau mit mehreren Bussegmenten, insbesondere beim Aufbau eines PROFIBUS-DP-Netzes, anstelle von Repeatern derartige Diagnoserepeater eingesetzt, so sind weder zur Topologieermittlung noch zu einer ebenfalls mittels der Diagnoserepeater durchführbaren Leitungsdiagnose zusätzliche Netzkomponenten erforderlich.

Zur Topologieermittlung wird zunächst jedem Busteilnehmer über die Busleitung ein Aufforderungssignal in Form eines initiierenden Messtelegramms zum Senden eines Antwortsignals oder -telegramms übermittelt. Während der Übermittlung des Antworttelegramms wird ein Messsignal über die Busleitung gesendet, das vom antwortenden Busteilnehmer reflektiert wird.

Da ein Repeater und auch der an dessen Stelle eingesetzte Diagnoserepeater ein passiver Busteilnehmer (Slave) ist, kann dieser einen anderen Busteilnehmer nicht zum Senden veranlassen. Diese Aufgabe wird daher von einem in einem derartigen Bussystem bereits vorhandenen Master oder einem anderen aktiven Busteilnehmer ausgeführt, der dánn um eine entsprechende Initiatorfunktion (Meßinitiator) erweitert ist, so dass wiederum keine zusätzliche Netzkomponente erforderlich ist. Der Meßinitiator fordert somit den oder jeden Busteilnehmer zum Senden auf, während der Diagnoserepeater dem antwortenden Busteilnehmer einen Meßimpuls übermittelt, der von diesem reflektiert wird.

In dieser Anwendung des Prinzips der Reflexionsmessung wird aus der Zeitspanne zwischen dem Senden des Messsignals und dem Eintreffen des Reflexionssignals vom antwortenden Busteilnehmer dessen Entfernung von diesem Diagnoserepeater - und somit dessen relative Position innerhalb des Bussegmentes - bestimmt. Dabei kann auch ein weiterer an diesem Bussegment vorhandener Diagnoserepeater ausgemessen werden, da dieser als Slave modelliert ist und eine eigene Teilnehmeradresse aufweist.

Die Diagnosefunktion dient zudem zur Leitungsdiagnose, d. h. zur Ermittlung des Fehlerortes und der Fehlerursache von entlang der Busleitung auftretenden Leitungsfehlern, wie z. B. einem Kurzschluß, einem Kabelbruch oder einem falsch angeschlossenen Abschlußwiderstand. Im Anschluß an die automatische Ermittlung der Netztopologie kann dann der Fehlerort relativ zu den vorhandenen Busteilnehmern angegeben werden, beispielsweise in der Form "Fehler zwischen Teilnehmer Tₓ und T_{y}".

Bei dieser Anwendung des Prinzips der Reflexionsmessung wird die Erkenntnis ausgenutzt, dass sich ein Leitungsfehler oder eine Störstelle entlang einer Busleitung durch eine lokale Änderung des Wellenwiderstandes auswirkt und daher einen Impuls oder ein Signal reflektiert. So wird der Wellenwiderstand z. B. bei einem Kurzschluß niederohmig und bei einer Unterbrechung hochohmig. Aus der Zeitspanne zwischen dem Aussenden eines Meßimpulses bzw. eines Meßsignals und dem Eintreffen der Reflexion läßt sich die Entfernung eines Leitungsfehlers bzw. einer Störstelle ermitteln. Darüber hinaus können aus der Polarität der Reflexion Aussagen über die Ursache des Leitungsfehlers abgeleitet werden.

In vorteilhafter Ausgestaltung wird die Entfernung des oder jedes Busteilnehmers vom Diagnoserepeater in einer Topologietabelle hinterlegt. Die Topologietabelle jedes im Bussystem oder Netz vorgesehenen Diagnoserepeaters umfaßt eine Anzahl von den Teilnehmeradressen aller Busteilnehmer zugeordneten Tabellenfeldern. Dabei ist insbesondere ein Statusfeld zur Kennzeichnung der Identifikation des Busteilnehmers vorgesehen. Auch ist ein teilnehmerspezifisches Bussegmentfeld vorgesehen, in das eine Eintragung der mit dem Diagnoserepeater verbundenen Bussegmente erfolgt. Zudem ist ein Entfernungsfeld zur Eintragung der ermittelten Entfernung des jeweiligen, gefundenen Busteilnehmers vorgesehen. Des Weiteren umfaßt die Topologietabelle ein Typenfeld zur Kennzeichnung eines benachbarten Diagnoserepeaters bzw. eines anderen Busteilnehmers. Ferner ist ein repeaterspezifisches Bussegmentfeld vorgesehen, das zur Kennzeichnung des jeweiligen Bussegmentes dient, an dem der ermittelte benachbarte Diagnoserepeater angeschlossen ist.

Wenn während einer in zweckmäßiger Weiterbildung ebenfalls auf dem Prinzip der Reflexionsmessung beruhenden Störstellenermittlung oder Leitungsdiagnose eine Störstelle bzw. ein Leitungsfehler entlang der Busleitung ermittelt wird, wird vorteilhafterweise anhand der Topologietabelle festgestellt, zwischen welchen Busteilnehmern die Störstelle bzw. der Leitungsfehler liegt.

Mit diesem Verfahren und mit dieser Vorrichtung zur automatischen Topologieermittlung ist die Bestimmung oder Ermittlung der Entfernung jedes Busteilnehmers zu einem definierten Busteilnehmer desselben Bussegmentes sowie deren Verschaltung untereinander in einfacher sowie zuverlässiger Art und Weise möglich. Insbesondere auch bei einer Topologieänderung, d. h. einer Änderung und/oder Erweiterung der Konfiguration von Busteilnehmern oder Bussegmenten ist eine exakte Bestimmung der Reihenfolge und des relativen Abstand der Busteilnehmer innerhalb eines Bussegmentes und deren Anordnung innerhalb des Netzes mit besonders geringem Aufwand zuverlässig ermittelbar.

Das erfindungsgemäße Verfahren und die erfindungsgemäße Vorrichtung eignen sich daher besonders für Feldbussysteme, insbesondere für das sogenannten PROFIBUS DP-Netz.

Nachfolgend wird ein Ausführungsbeispiel der Erfindung anhand einer Zeichnung näher erläutert. Darin zeigen:
- FIG 1: ein einfaches Bussystem mit einem Messinitiator und einem zwei Bussegmente verbindenden Diagnoserepeater zur Topologieermittlung,
- FIG 2: eine im Diagnoserepeater gemäß FIG 1 hinterlegte Topologietabelle,
- FIG 3: ein komplexes Bussystem mit mehreren Diagnoserepeatern,

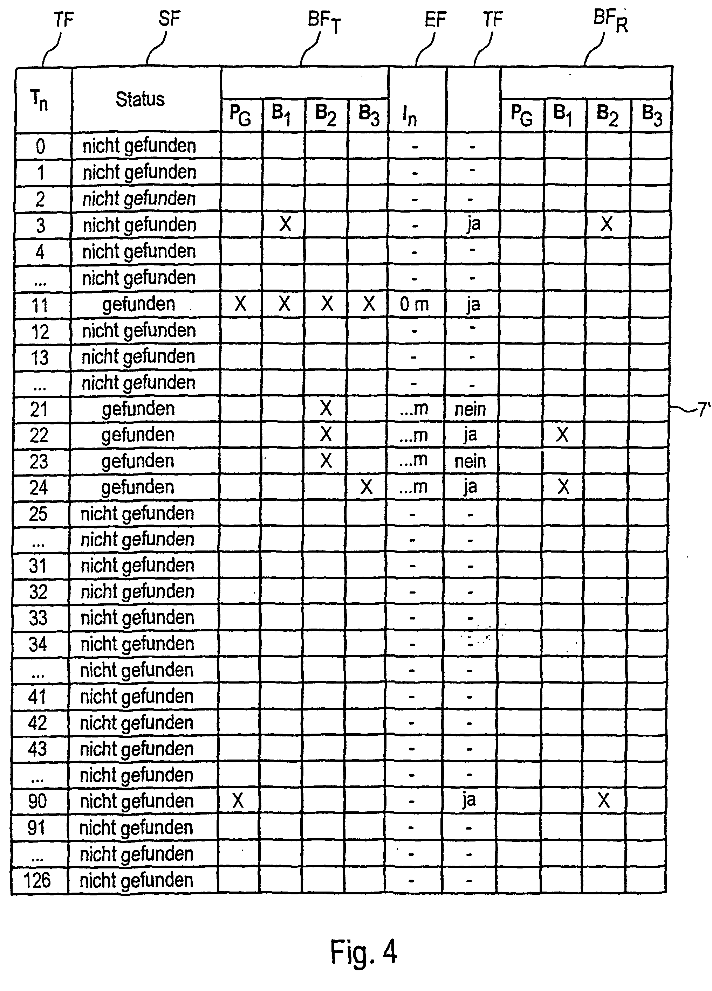

- FIG 4: die Topologietabelle eines Diagnoserepeaters des Bussystems gemäß FIG 3,
- FIG 5: eine Codierung einer Segmentkennung eines Datentelegramms, und
- FIG 6: schematisch zur Topologieerkennung von einem Diagnoserepeater segmentspezifisch gesendete Datentelegramme.

Einander entsprechende Teile sind in allen Figuren mit den gleichen Bezugszeichen versehen.

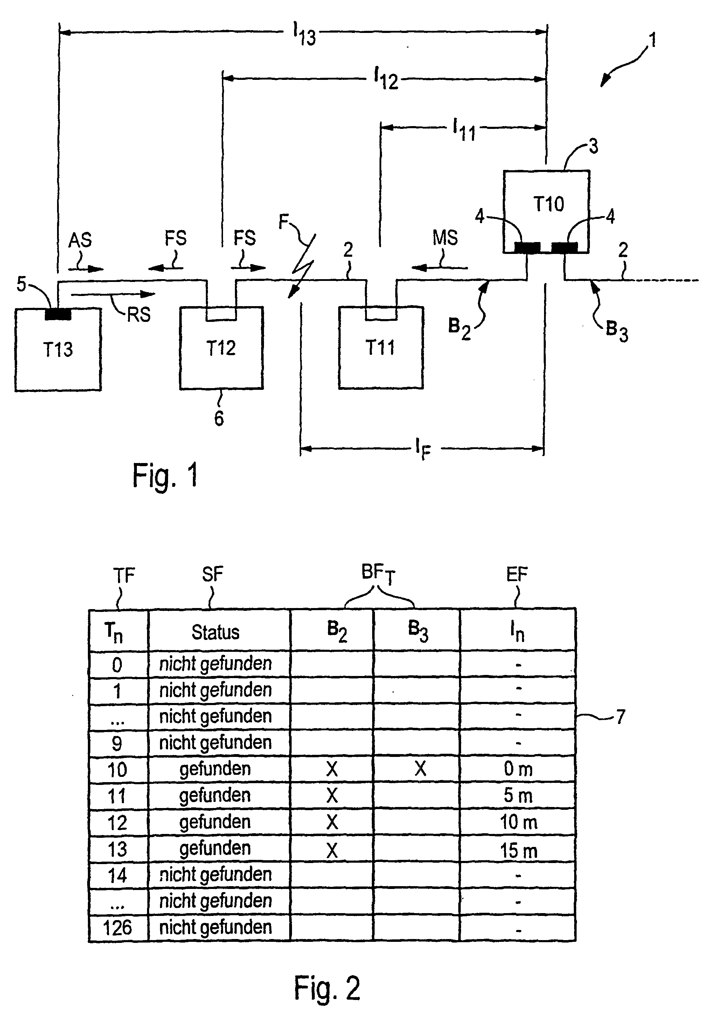

FIG 1 zeigt einen Ausschnitt aus einem komplexeren Bussystem 1, insbesondere eines PROFIBUS DP-Netzes. Beim PROFIBUS-DP-Netzwerk, das eine Vielzahl von Bussegmenten Bₙ umfassen kann, können insgesamt 127 Busteilnehmer mit den Teilnehmeradressen T₀ bis T₁₂₆ innerhalb des Bussystems 1 vorgesehen sein. Ein Bussegment Bₙ ist dabei ein Leitungsstück oder -abschnitt einer Busleitung 2, an dem bis zu 32 Netzkomponenten oder Teilnehmer Tₙ angeschlossen sein können. Die Leitungslänge des jeweiligen Bussegmentes Bₙ ist dabei - abhängig von der Baud-rate der Datenübertragung - begrenzt.

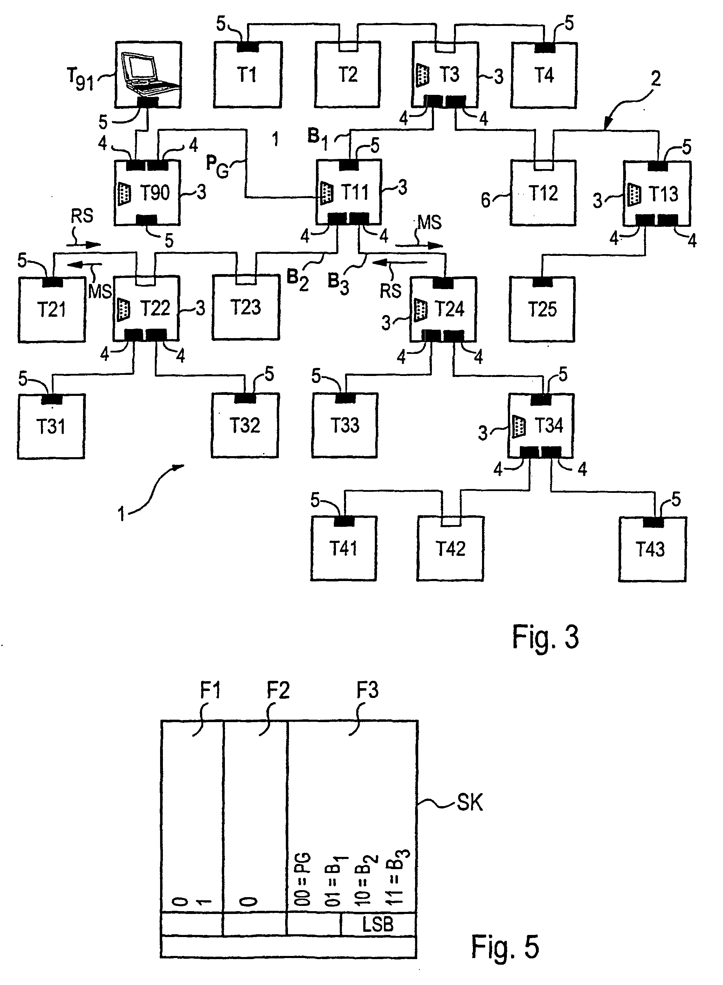

Wie in FIG 1 angedeutet und in FIG 3 dargestellt, werden einzelne Bussegmente Bₙ mittels Leitungstreibern oder Leitungsverstärkern - sogenannten Repeatern - verbunden, wobei diese Repeater zur Realisierung von Verzweigungen im Netzwerk dienen. Ein solcher Repeater ist nunmehr als Diagnoserepeater 3 ausgeführt, der zusätzlich zur Repeaterfunktion für die Bussegmente B₁,B₂ eine Messschaltung 4 zur Reflexionsmessung aufweist.

Der Diagnoserepeater 3 weist im Ausführungsbeispiel zwei Messschaltungen oder -einrichtungen 4 mit (nicht dargestellten) Abschlußwiderständen auf. Die Messeinrichtungen 4 sind mit der Busleitung 2 verbunden und jeweils einem Bussegment B₂ bzw. B₃ zugeordnet. Jedes Bussegment umfasst eine Anzahl von an die jeweilige Busleitung 2 angeschlossenen Busteilnehmern Tₙ, wobei im Ausführungsbeispiel lediglich das Bussegment B₂ mit Busteilnehmern T11 bis T13 belegt ist. Dem Busteilnehmer T13 ist ein Abschlusswiderstand 5 zugeschaltet. Das Bussegment B₂ weist einen Messinitiator 6 als aktiven Busteilnehmer T12 auf, während der Diagnoserepeater 3 passiver Busteilnehmer T10 ist.

Die Topologieermittlung des Bussystems 1 wird mittels einer Reflexionsmessung durchgeführt. Dabei wird die Tatsache ausgenutzt, dass sich ein sendender Busteilnehmer Tₙ am Bussegment B₂ oder an der Busleitung 2 ebenso verhält, wie eine durch den Pfeil symbolisierte Störstelle F. Ein sendender Busteilnehmer Tₙ verringert nämlich seinen Innenwiderstand beim Senden von ∞ auf etwa 40Ω. Wird nun ein Messimpuls auf die Busleitung 2 gegeben, dann wird dieser Messimpuls von einem sendenden Busteilnehmer Tₙ reflektiert.

Ein Busteilnehmer Tₙ wird zum Senden veranlasst, indem dieser vom Messinitiator 6 mit einem Aufforderungssignal FS angesprochen und somit zum Senden veranlasst wird. Beim PROFIBUS ist hierzu ein Messtelegramm in Form eines sogenannten SRD mit DSAP = 3FH ohne Daten (SRD-Messtelegramm) vorgesehen. Verhält sich der angesprochene Busteilnehmer Tₙ normkonform, so antwortet dieser mit einem Antwortsignal AS, das beim PROFIBUS ein sogenanntes RS (FC = x3H) oder RS-Messtelegramm ist.

Während ein Busteilnehmer Tₙ auf ein Aufforderungssignal FS (SRD-Messtelegramm) mit einem Antwortsignal AS (SR-Messtelegramm) antwortet, sendet der Diagnoserepeater 3 einen Messimpuls oder ein Messsignal MS, der bzw. das von dem sendenden Teilnehmer Tₙ reflektiert wird. Aus dem Zeitraum zwischen dem Senden des Messimpulses MS und dem Eintreffen der Reflexion, d. h. eines Reflexionssignals RS vom antwortenden Busteilnehmer Tₙ bestimmt die Messeinrichtung 4 des Diagnoserepeaters 3 die relative Position dieses Busteilnehmers Tₙ an der Busleitung 2 und somit innerhalb des BussegmenLes B₂. Aus der durch die 2-fach Leitungs- oder Kabellaufzeit dividierten Laufzeit wird dabei die Entfernung des jeweiligen Busteilnehmers Tₙ vom Diagnoserepeater 3 ermittelt.

Der Diagnoserepeater 3 speichert die ermittelten Entfernungen lₙ der Busteilnehmer Tₙ in einer in FIG 2 dargestellten Topologietabelle 7. In der Topologietabelle 7 sind alle möglichen Busteilnehmer Tₙ des Bussystems 1 (Teilnehmerfeld TF) enthalten. In die Topologietabelle 7 werden alle Busteilnehmer Tₙ hinsichtlich deren Status (Statusfeld SF) und deren Position am jeweiligen Bussegment B_{2,3} (Bussegmentfeld BF_{T}) sowie hinsichtlich deren Entfernung lₙ vom Diagnoserepeater 3 (Entfernungsfeld EF) hinterlegt. Der Status eines noch nicht ausgemessenen Busteilnehmers Tₙ ist offen, während ausgemessene Busteilnehmer Tₙ den Status "gefunden" oder "nicht gefunden" haben. Im Ausführungsbeispiel ist vorausgesetzt, dass am Bussegment B₂ keine Busteilnehmer Tₙ hängen und alle Busteilnehmer Tₙ am Bussegment B₂ ausgemessen sind. Der Diagnoserepeater 3 als Busteilnehmer T10 sitzt sowohl am Bussegment B₂ als auch am Bussegment B₃ und hat von sich selbst die Entfernung L₁₀ = 0m.

Wird im Anschluss an die Ermittlung der Bustopologie die Entfernung einer Störstelle, die in FIG 1 durch den Pfeil F auf der Busleitung 2 des Bussegments B₂ symbolisiert ist, ermittelt, so kann anhand der Topologietabelle 7 festgestellt werden, zwischen welchen Busteilnehmern Tₙ diese Störstelle oder der Leitungsfehler F liegt. Im Ausführungsbeispiel liegt die Störstelle F zwischen dem Busteilnehmer T11, dessen Entfernung l₁₁ = 5m vom Diagnoserepeater 3 beträgt, und dem Busteilnehmer T12, d.h. dem Messinitiator 6, dessen Entfernung l₁₂ = 10m vom Diagnoserepeater 3 beträgt. Die exakte Entfernung l_{F} der Störstelle F vom Diagnoserepeater 2 wird ebenfalls mittels der Messeinrichtung 4 und dabei wiederum vorzugsweise nach dem Prinzip der Reflexionsmessung ermittelt.

Zum Erkennen von Störstellen oder Leitungsfehlern F auf der Busleitung 5 sendet der Diagnoserepeater 3 ein initiierendes Messsignal in die Busleitung 2. Dieses initiierende Messsignal wird aufgrund der Änderung des Wellenwiderstandes der Busleitung 2 an der Störstelle F reflektiert und von der Messeinrichtung 4 als Reflexion oder Reflexionssignal detektiert. Aus der Zeitdifferenz zwischen dem Startzeitpunkt des vom Diagnoserepeater 3 initiierten Messsignals und dem Eintreffen des Reflexionssignals an der Messeinrichtung 4 wird die Entfernung l_{F} der Störstelle oder des Leitungsfehlers F vom Diagnoserepeater 3 ermittelt. Dazu wird wiederum die erfasste Laufzeit durch die 2-fache Leitungs- oder Kabellaufzeit, die beispielsweise 5ns/m beträgt, dividiert.

Das initiierende Messsignal ist vorzugsweise ein Messtelegramm, d.h. ein das Nutzsignal bildendes Datentelegramm. Eine dadurch realisierte passive Reflexionsmessung hat gegenüber einer aktiven Reflexionsmessung den wesentlichen Vorteil einer rückwirkungsfreien Leitungsdiagnose, da kein separates Testsignal oder ein separater Messimpuls während des laufenden Busbetriebs auf die Busleitung 2 gegeben werden muss. Vielmehr wird das eigentliche Nutzsignal verwendet, um Leitungsfehler oder Störstellen F zu detektieren.

Durch Anwendung der passiven Reflexionsmessung ist somit zusätzlich zur Topologieermittlung eine Erkennung und Lokalisierung von Störstellen oder Leitungsfehlern F und damit eine besonders effektive Leitungsdiagnose auch während des Busbetriebs rückwirkungsfrei möglich.

Durch die Integration der zur Topologieermittlung und vorzugsweise auch zur Leitungsdiagnose dienenden Messeinrichtung 4 in einen dadurch hinsichtlich dessen Funktion zum Diagnoserepeater 3 erweiterten Repeater ist hinsichtlich dieser Messfunktion kein zusätzlicher oder separater Busbaustein innerhalb des Bussystems erforderlich. Der Messinitiator 6 ist ein aktiver Busteilnehmer, zweckmäßigerweise ein in einem derartigen Bussystem 1 bereits vorhandener Master, der um eine entsprechende Initiatorfunktion erweitert ist. Somit entfällt auch diesbezüglich ein separater Busbaustein.

FIG 3 zeigt ein vergleichsweise komplexes, vernetztes Bussystem 1 mit mehreren Diagnoserepeatern 3 und einem wiederum als Busteilnehmer T12 adressierten Messinitiator 6. Jeder dieser Diagnoserepeater 3 verbindet in diesem im Ausführungsbeispiel als PROFIBUS DP-Netzwerk ausgeführten Bussystem 1 maximal drei Bussegmente Bₙ mit- oder untereinander. Der nachfolgend näher betrachtete und als Busteilnehmer T11 adressierte Diagnoserepeater 3 ist zudem über dessen PG-Schnittstelle mit der Messschaltung 4 des als Busteilnehmer T90 adressierten Diagnoserepeaters 3 verbunden. Dessen weitere Messschaltung 4 ist mit einem als Busteilnehmer T91 adressierten Programmiergerät (PG) verbunden.

Eine gegenüber der Topologietabelle 7 gemäß FIG 2 erweiterte und im Ausführungsbeispiel dem als Busteilnehmer T11 adressierten Diagnoserepeater 3 zugeordnete Topologietabelle 7' weist zusätzlich zum Teilnehmerfeld TF und zum Statusfeld SF sowie zum teilnehmerspezifischen Bussegmentfeld BF_{T} und zum Entfernungsfeld EF ein Typenfeld TF zur Kennzeichnung der Art des Busteilnehmers Tₙ und ein repeaterspezifisches Bussegmentfeld BF_{R} zur Kennzeichnung eines segmentspezifischen benachbarten Diagnoserepeaters 3 auf.

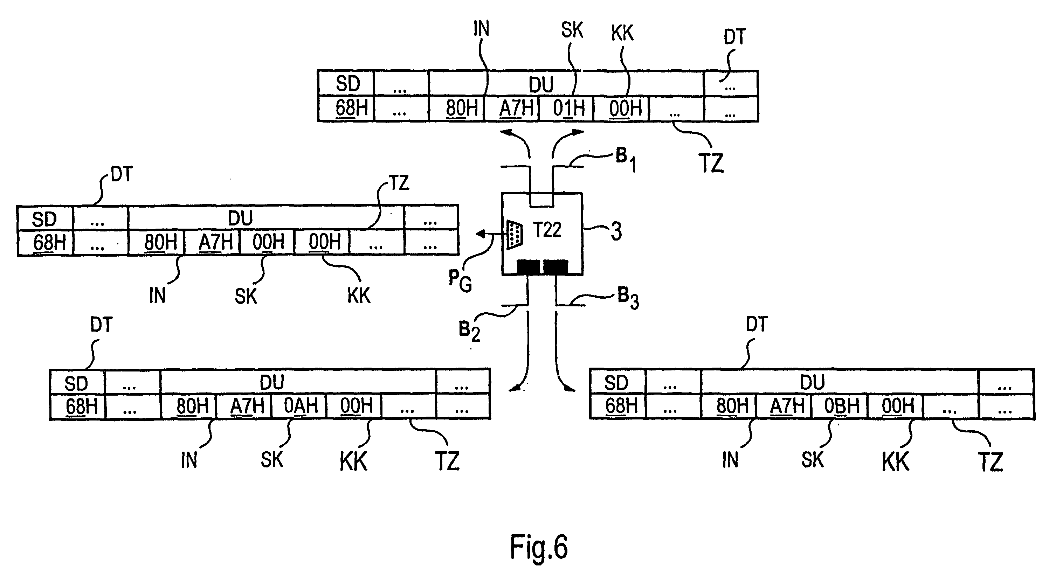

Die Eintragungen in dieser erweiterten Topologietabelle 7' sind infolge der automatischen Ermittlung der Netztopologie vom als Busteilnehmer T11 adressierten Diagnoserepeater 3, der nachfolgend als Diagnoserepeater T11 bezeichnet wird, vorgenommen worden. Infolge eines vom als Busteilnehmer T12 adressierten Messinitiator 6 gesendeten niederprioren SRD-Messtelegramm (SRD an DSAP = 63), auf das der an das Bussegment B₁ des Diagnoserepeaters T11 angeschlossene Busteilnehmer T3 mit einem Datentelegramm DT (FIG 6) antwortet, hat der Diagnoserepeater T11 diesen als solchen erkannt und im Typenfeld TF entsprechend gekennzeichnet. Eine Eintragung in das repeaterspezifische Bussegmentfeld BF_{R} der Topologietabelle 7' kennzeichnet zudem das entsprechende Bussegment B₂, über das der als Busteilnehmer T3 adressierte Diagnoserepeater 3, der nachfolgend auch als Diagnoserepeater T3 bezeichnet wird, an den Diagnoserepeater T11 angeschlossen ist.

Zu diesem Busteilnehmer T3 ist in der erweiterten Topologietabelle 7' der Status "nicht gefunden" hinterlegt, da der Diagnoserepeater T11 an diesem Bussegment B₁ keine Messschaltung 4 aufweist. Der Diagnoserepeater T11 kann somit die Entfernung zum Diagnoserepeater T3 nicht ermitteln. Die Ermittlung dieser Entfernung lₙ erfolgt mittels des Diagnoserepeaters T3, da dieser an diesem Bussegment B₁ bzw. B₂ eine Messschaltung 4 aufweist. Die Entfernung lₙ zwischen diesen beiden Diagnoserepeatern 3 ist daher in der erweiterten Topologietabelle des Diagnoserepeaters T3 enthalten.

Infolge des vom Messinitiators 6 gesendeten niederprioren SRD-Messtelegramms hat der Diagnoserepeater T11 sich selbst die Entfernung L₁₁=0m und die durch diesen verbundenen Bussegmenten B₁,₂,₃ sowie die PG-Schnittstelle und den Status "gefunden" zugeordnet. Analog führen die an den Bussegmenten B₂ und B₃ des Diagnoserepeaters T11 angeschlossenen und als Busteilnehmer T22 bzw. T24 adressierten Diagnoserepeater 3 zu entsprechenden Eintragungen in der erweiterten Topologietabelle 7' des Diagnoserepeaters T11.

Die beiden am Bussegment B₂ dieses Diagnoserepeaters T11 angeschlossenen weiteren Busteilnehmer T21 und T23 antworten auf das vom Messinitiator 6 gesendete SRD-Messtelegramm mit einem RS-Messtelegramm und werden demzufolge als Busteilnehmer Tₙ erkannt, die keine Diagnoserepeater 3 sind. Dies spiegelt sich im Typenfeld TF der jeweiligen Topologietabelle 7' wieder. Der an die PG-Schnittstelle angeschlossene und als Busteilnehmer T90 adressierte Diagnoserepeater 3 wird zwar wiederum als solcher erkannt, erhält aber ebenfalls den Status "nicht gefunden", da der Diagnoserepeater T11 diesbezüglich wiederum keine Messschaltung 4 aufweist.

Während die an den Bussegmenten B₂ und B₃ angeschlossenen Busteilnehmer T21 bis T23 bzw. T24 auf das vom Messinitiator 6 ausgesendeten niederpriore SRD-Messtelegramm mit einem RS-Messtelegramm antworten, sendet der Diagnoserepeater T11 wiederum ein Messsignal MS an die Busteilnehmer T₂₁ bis T₂₄, worauf diese wiederum mit einem Reflexionssignal RS antworten. Aus der Signallaufzeit zwischen dem Aussenden des Messsignals MS und dem Eintreffen des Reflexionssignals RS ermittelt die jeweilige Messschaltung 4 des Diagnoserepeaters T11 wiederum die Entfernung L₂₁ bis L₂₄ des entsprechenden Busteilnehmers T₂₁ bis T₂₄ und trägt das Ergebnis in das entsprechende Entfernungsfeld EF seiner Topologietabelle 7' ein.

Während die übrigen Busteilnehmer Tₙ auf das niederpriore SRD-Messtelegramm des Messinitiators 6 mit einem RS-Messtelegramm antworten, antwortet der oder jeder Diagnoserepeater 3 hierauf mit einem Datentelegramm DT. Dieses enthält zusätzlich zu einer in FIG 5 dargestellten Segmentkennung SK (8Bit) gemäß FIG 6 eine Identifikationsnummer IN des Diagnoserepeaters 3(16Bit), eine Kaskadierungskennung oder Kaskadiertiefenkennung KK (8Bit) und einen Topologieaktualisierungszähler TZ (16Bit).

Anhand der in FIG 5 dargestellten Segmentkennung SK ist das Bussegment Bₙ ablesbar, an dem der Diagnoserepeater 3 das Datentelegramm DT versendet hat. Zudem lässt sich an dieser Segmentkennung SK ablesen, ob an diesem Bussegment Bₙ eine Messschaltung 4 zur Reflexionsmessung angeschlossen ist. Dazu ist ein erstes Segmentfeld F1 logisch "0" gesetzt, wenn an diesem Bussegment Bₙ keine Messschaltung 4 angeschlossen ist. Andernfalls ist dieses Segmentfeld F1 logisch "1" gesetzt. Ein weiteres Segmentfeld F2 ist reserviert und logisch "0" gesetzt. In einem dritten Segmentfeld F3 erfolgt die Kennzeichnung des jeweiligen Bussegments Bₙ, wobei im Falle der PG-Schnittstelle "00" und im Falle der Bussegmente B_{1,2,3} die Kennung "01", "10" bzw. "11" gesetzt ist.

Das vom Diagnoserepeater 3 segmentspezifisch gesendete Datentelegramm DT ist in FIG 6 dargestellt. Daraus ist ersichtlich, dass jedes segmentspezifisch gesendete Datentelegramm DT zunächst dieselbe Identifizierungsnummer IN = 80H A7H enthält. Im über das Bussegment B₁ gesendeten Datentelegramm ist die Segmentkennung auf SK = 01H gesetzt, da gemäß dem Ausführungsbeispiel nach FIG 3 an diesem Bussegment B1 eine Messschaltung 4 des Diagnoserepeaters T3 sitzt. Im über die PG-Schnittstelle gesendeten Datentelegramm ist die Segmentkennung auf SK = 00H gesetzt, während diese im über die Bussegmente B₂ und B₃ gesendeten Datentelegramm auf SK = 10 = 0AH bzw. SK = 11 = 0BH gesetzt ist. In jedem segmentspezifisch gesendeten Datentelegramm DT ist die Kaskadierungskennung auf KK = 00H gesetzt.

Diese Kaskadierungskennung KK gibt die Anzahl derjenigen Diagnoserepeater 3 an, die das Datentelegramm DT eines anderen Diagnoserepeaters 3 weitergeleitet haben. Der Diagnoserepeater 3 gemäß FIG 6 hat das Datentelegramm DT gesendet und verwendet daher als Kaskadiertiefenkennung KK = OOH. Jeder Diagnoserepeater 3, der ein solches Datentelegramm DT weiterleitet, inkrementiert die Kaskadiertiefenkennung z. B. um Eins. Dies bedeutet, dass ein Diagnoserepeater 3, der dieses Datentelegramm DT erhält, die Kennung auf beispielsweise KK = 01H setzt, bevor er dieses Datentelegramm DT weiterleitet. Somit lässt sich in dieser Kennung KK eine Kaskadiertiefe von bis zu 128 Diagnoserepeatern 3, die vorzugsweise jedoch auf eine geringere Anzahl von z. B. neun oder zehn Diagnoserepeater 3 begrenzt ist, verschlüsseln.

Sendet innerhalb des in FIG 3 dargestellten Bussystems 1 oder PROFIBUS DP-Netzwerkes der Messinitiator 6 ein niederpriores SRD-Messtelegramm über die Busleitung 2, so antwortet z. B. der Diagnoserepeater T3 mit einem entsprechenden segmentspezifischen Datentelegramm DT, das der Diagnoserepeater T11 über dessen Bussegment B₁ empfängt. Der Diagnoserepeater T11 sendet dieses Datentelegramm DT über dessen Bussegmente B₂ und B₃ weiter, nachdem er in diesem Datentelegramm DT die Kaskadiertiefenkennung KK inkrementiert hat. Die beiden als Busteilnehmer T22 und T24 adressierten Diagnoserepeater 3 erkennen dann anhand dieser Kaskadiertiefenkennung KK, dass dieses Datentelegramm DT bereits von einem Diagnoserepeater 3 weitergeleitet worden ist.

Somit hören alle Diagnoserepeater 3 den Telegrammverkehr auf der Busleitung 2 ab und erstellen deren Topologietabellen. Dazu sendet jeder Diagnoserepeater 3 über dessen Messschaltungen 4 und die jeweiligen Bussegmente Bₙ entsprechend Meßstange MS zur Ermittlung der Entfernung lₙ des jeweiligen Busteilnehmers Tₙ, während dieser auf das niederpriore SRD-Messtelegramm des Messinitiators 6 mit einem Datentelegramm DT im Falle eines Diagnoserepeaters 3 bzw. mit einem RS-Messtelegramm im Falle eines anderen Busteilnehmers Tₙ, der kein Diagnoserepeater 3 ist, antwortet. Die Gesamtheit der Topologietabellen 7' aller Diagnoserepeater 3 ergibt somit die gesamte Netztopologie des Bussystems 1.

## Patentansprüche

1. Verfahren zur Ermittlung der Netztopologie eines Bussystems (1) mit einer Anzahl von Busteilnehmern (Tₙ), die an untereinander verbundenen Bussegmenten (Bₙ) einer Busleitung (2) angeordneten sind,
- wobei jedem Busteilnehmer (Tₙ) ein initiierendes Meßtelegramm (SRD) gesendet wird, das von einem mit einer Meßeinrichtung (4) zur Reflexionsmessung versehenen und eine Anzahl von Bussegmenten (Bₙ) verbindenden Diagnoserepeater (3) mit einem eine Segmentkennung (SK) aufweisenden Datentelegramm (DT) und von den übrigen Busteilnehmern (Tₙ) mit einem Antworttelegramm (AS,RS) beantwortet wird,
- wobei vom Diagnoserepeater (3) ein Messsignal (MS) an den antwortenden Busteilnehmer (Tₙ) gesendet wird, das von diesem reflektiert wird, und
- wobei aus der Zeitspanne zwischen dem Senden des Messsignals (MS) und dem Eintreffen des Reflexionssignals (RS) die Entfernung (lₙ) des antwortenden Busteilnehmers (Tₙ) vom Diagnoserepeater (3) bestimmt wird.

2. Verfahren nach Anspruch 1, bei dem vom Diagnoserepeater (3) eine Kaskadierungskennung (KK) eines empfangenen Datentelegramms (DT) inkrementiert und dieses segmentspezifisch weitergeleitet wird.

3. Verfahren nach Anspruch 1 oder 2, bei dem die Entfernung (lₙ) des antwortenden Busteilnehmers (Tₙ) in einer dem Diagnoserepeater (3) zugeordneten Topologietabelle (7,7') hinterlegt wird.

4. Verfahren nach Anspruch 3, bei dem in die Topologietabelle (7,7') eine Segmentkennung (BF) des antwortenden Busteilnehmer (Tₙ) eingetragen wird.

5. Verfahren nach Anspruch 3 oder 4, bei dem in die Topologietabelle (7,7`) eine Statuskennung (SF) des antwortenden Busteilnehmers (Tₙ) eingetragen wird.

6. Verfahren nach einem der Ansprüche 3 bis 5, bei dem anhand der Topologietabelle (7) der Fehlerort eines mittels der Messeinrichtung (4) detektierten Leitungsfehlers (F) zwischen zwei Busteilnehmern (Tₙ) ermittelt wird.

7. Vorrichtung zur Ermittlung der Netztopologie eines Bussystems (1) mit einer Anzahl von an Bussegmenten (Bₙ) einer Busleitung (2) angeordneten Busteilnehmern (Tₙ),
- mit einer Anzahl von die Bussegmente (Bₙ) untereinander verbindenden Diagnoserepeatern (3), von denen jeder eine segmentspezifische Meßeinrichtung (4) zur Reflexionsmessung aufweist, und
- mit einem an die Busleitung (2) angeschlossenen Messinitiator (6), welcher derart ausgestaltet ist, daß er an die Busteilnehmer (Tₙ) ein Messtelegramm (SRD) sendet, das der oder jeder Diagnoserepeater (3) mit einem eine Segmentkennung (SK) aufweisenden Datentelegramm (DT) und jeder übrige Busteilnehmer (Tₙ) mit einem Antworttelegramm (RS) beantwortet,
wobei der Diagnoserepeater (3) denart ausgestaltet ist, daß er einen antwortenden Busteilnehmer (Tₙ) identifiziert und an diesen ein Messsignal (MS) sendet sowie aus der Zeitspanne zwischen dem Senden des Messsignals (MS) und dem Eintreffen eines Reflexionssignals (RS) die Entfernung zum antwortenden Busteilnehmer (Tₙ) bestimmt.

8. Vorrichtung nach Anspruch 7, bei der jeder Diagnoserepeater (3) eine Topologietabelle (7,7') aufweist, in der zu dem oder jedem Busteilnehmer (Tₙ) dessen Entfernung (lₙ) eingetragen und das von diesem belegte Bussegment (Bₙ) gekennzeichnet ist.

9. Vorrichtung nach Anspruch 8, bei der in der Topologietabelle (7') jedes Diagnoserepeaters (2) den adressierten Busteilnehmern (Tₙ) eines oder mehrere der folgenden Felder zugeordnet ist:
- ein Statusfeld (SF) zur Kennzeichnung der Identifikation des Busteilnehmers (Tₙ),
- ein teilnehmerspezifisches Bussegmentfeld (BF_{T}) zur Zuordnung eines mit dem Diagnoserepeater (3) verbundenen Bussegments (Bₙ),
- ein Entfernungsfeld (EF) zur Eintragung der Entfernung (lₙ) des Busteilnehmers (Tₙ),
- ein Typenfeld (TF) zur Kennzeichnung der Art des Busteilnehmers (Tₙ),
- ein repeaterspezifisches Bussegmentfeld (BF_{R}) zur Kennzeichnung eines segmentspezifisch benachbarten Diagnoserepeaters (3).

10. Vorrichtung nach einem der Ansprüche 7 bis 9, bei der jeder Diagnoserepeater (3) zwei Meßeinrichtungen (4) zur Reflexionsmessung aufweist, wobei jedem Bussegment (Bₙ) lediglich eine Meßeinrichtung (4) zugeordnet ist, und wobei an mindestens einem Bussegment (Bₙ) mindestens ein Messinitiator (6) angeordnet ist.

## Claims

1. A method for determining the network topology of a bus system (1) having a number of bus subscribers (Tₙ), which are arranged on mutually connected bus segments (Bₙ) of a bus line (2),
- with each bus subscriber (Tₙ) being sent an initiating measurement message (SRD) which is responded to by a diagnosis repeater (3), which is provided with a measurement device (4) for reflection measurement and connects a number of bus segments (Bₙ), with a data message (DT) which has a segment identifier (SK), and is responded to by the other bus subscribers (Tₙ) with a response message (AS, RS),
- with the diagnosis repeater (3) sending a measurement signal (MS) to the responding bus subscriber (Tₙ) which reflects this signal, and
- with the distance (lₙ) between the responding bus subscriber (Tₙ) and the diagnosis repeater (3) being determined from the time interval between the transmission of the measurement signal (MS) and the arrival of the reflection signal (RS).

2. The method as claimed in Claim 1, in which the diagnosis repeater (3) increments a cascading identifier (KK) of a received data message (DT) and passes this on on a segment-specific basis.

3. The method as claimed in Claim 1 or 2, in which the distance (lₙ) to the responding bus subscriber (Tₙ) is stored in a topology table (7, 7') which is associated with the diagnosis repeater (3).

4. The method as claimed in Claim 3, in which a segment identifier (BF) for the responding bus subscriber (Tₙ) is entered in the topology table (7, 7').

5. The method as claimed in claim 3 or 4, in which a status identifier (SF) for the responding bus subscriber (Tₙ) is entered in the topology table (7, 7').

6. The method as claimed in one of claims 3 to 5, in which the fault location of a line fault (F), which is detected by means of the measurement device (4), between two bus subscribers (Tₙ) is determined using the topology table (7).

7. An apparatus for determining the network topology of a bus system (1) having a number of bus subscribers (Tₙ) which are arranged on bus segments (Bₙ) of a bus line (2),
- having a number of diagnosis repeaters (3) which connect the bus segments (Bₙ) to one another, and each of which has a segment-specific measurement device (4) for reflection measurement, and
- having a measurement initiator (6), which is connected to the bus line (2) which is equipped in such a way as to send a measurement message (SRD) to the bus subscribers (Tₙ), to which the or each diagnosis repeater (3) responds with a data message (DT) which has a segment identifier (SK), and every other bus subscriber (Tₙ) responds with a response message (RS),
with the diagnosis repeater (3) being equipped in such a way as to identify a responding bus subscriber (Tₙ) and send a measurement signal (MS) to it, and to determine the distance to the responding bus subscriber (Tₙ) from the time interval between the transmission of the measurement signal (MS) and the arrival of a reflection signal (RS).

8. The apparatus as claimed in claim 7, in which each diagnosis repeater (3) has a topology table (7, 7'), in which the distance (lₙ) to the or to each bus subscriber (Tₙ) is entered, and which is identified by this associated bus segment (Bₙ).

9. The apparatus as claimed in claim 8, in which one or more of the following fields is associated with the addressed bus subscribers (Tₙ) in the topology table (7') of each diagnosis repeater (2):
- a status field (SF) for indicating the identification of the bus subscriber (Tₙ),
- a subscriber-specific bus segment field (BFT) for association of a bus segment (Bₙ) which is connected to the diagnosis repeater (3),
- a distance field (EF) for entering the distance (lₙ) to the bus subscriber (Tₙ),
- a type field (TF) for identifying the type of bus subscriber (Tₙ), and
- a repeater-specific bus segment field (BF_{R}) for identifying a diagnosis repeater (3) which is adjacent on a segment-specific basis.

10. The apparatus as claimed in one of claims 7 to 9, in which each diagnosis repeater (3) has two measurement devices (4) for reflection measurement, with each bus segment (Bₙ) having only one associated measurement device (4) and with at least one measurement initiator (6) being arranged on at least one bus segment (Bₙ).

## Revendications

1. Procédé pour déterminer la topologie de réseau d'un système de bus (1) comportant un certain nombre d'utilisateurs de bus (Tₙ) qui sont agencés sur des segments de bus (Bₙ), reliés entre eux, d'une ligne de bus (2),
- dans lequel on envoie à chaque utilisateur de bus (Tₙ) un télégramme de mesure déclencheur (SRD) auquel un répéteur à diagnostic (3), muni d'un dispositif de mesure (4) pour la mesure de réflexion et reliant un certain nombre de segments de bus (Bₙ), répond avec un télégramme de données (DT) comportant un indicateur de segment (SK) et auquel les autres utilisateurs de bus (Tₙ) répondent avec un télégramme de réponse (AS, RS),
- dans lequel le répéteur à diagnostic (3) envoie à l'utilisateur de bus répondant (Tₙ) un signal de mesure (MS) qui est réfléchi par celui-ci; et
- dans lequel on détermine à partir de l'intervalle de temps entre l'émission du signal de mesure (MS) et l'arrivée du signal de réflexion (RS) la distance (Iₙ) de l'utilisateur de bus répondant (Tₙ) au répéteur à diagnostic (3).

2. Procédé selon la revendication 1, dans lequel le répéteur à diagnostic (3) incrémente un indicateur de cascade (KK) d'un télégramme de données (DT) reçu et retransmet celui-ci de manière spécifique au segment.

3. Procédé selon la revendication 1 ou 2, dans lequel on enregistre la distance (lₙ) de l'utilisateur de bus répondant (Tₙ) dans un tableau de topologie (7, 7') associé au répéteur à diagnostic (3).

4. Procédé selon la revendication 3, dans lequel on enregistre dans le tableau de topologie (7, 7') un indicateur de segment (BF) de l'utilisateur de bus répondant (Tₙ).

5. Procédé selon la revendication 3 ou 4, dans lequel on enregistre dans le tableau de topologie (7, 7') un indicateur d'état (SF) de l'utilisateur de bus répondant (Tₙ).

6. Procédé selon l'une des revendications 3 à 5, dans lequel, à l'aide du tableau de topologie (7), on détermine l'emplacement d'une erreur sur ligne (F), détectée au moyen du dispositif de mesure (4), entre deux utilisateurs de bus (Tₙ).

7. Dispositif pour déterminer la topologie de réseau d'un système de bus (1) comportant un certain nombre d'utilisateurs de bus (Tₙ) qui sont agencés sur des segments de bus (Bₙ) d'une ligne de bus (2),
- avec un certain nombre de répéteurs à diagnostic (3) qui relient les segments de bus (Bₙ) entre eux et dont chacun comporte un dispositif de mesure (4) spécifique au segment et destiné à la mesure de réflexion, et
- avec un déclencheur de mesure (6) qui est raccordé à la ligne de bus (2) et qui est conçu de telle sorte qu'il envoie aux utilisateurs de bus (Tₙ) un télégramme de mesure (SRD) auquel le répéteur à diagnostic ou chaque répéteur à diagnostic (3) répond avec un télégramme de données (DT) comportant un indicateur de segment (SK) et auquel chaque autre utilisateur de bus (Tₙ) répond avec un télégramme de réponse (RS),
le répéteur à diagnostic (3) étant conçu de telle sorte qu'il identifie un utilisateur de bus répondant (Tₙ) et envoie à celui-ci un signal de mesure (MS) et qu'il détermine à partir de l'intervalle de temps entre l'émission du signal de mesure (MS) et l'arrivée d'un signal de réflexion (RS) la distance de l'utilisateur de bus répondant (Tₙ).

8. Dispositif selon la revendication 7, dans lequel chaque répéteur à diagnostic (3) comporte un tableau de topologie (7, 7') dans lequel il est enregistré pour l'utilisateur de bus ou pour chaque utilisateur de bus (Tₙ) la distance de celui-ci (Iₙ) et dans lequel le segment de bus (Bₙ) occupé par celui-ci est caractérisé.

9. Dispositif selon la revendication 8, dans lequel, dans le tableau de topologie (7') de chaque répéteur à diagnostic (3), il est associé aux utilisateurs de bus adressés (Tₙ) un ou plusieurs des champs suivants :
- un champ d'état (SF) pour caractériser l'identification de l'utilisateur de bus (Tₙ),
- un champ de segment de bus (BF_{T}) spécifique à l'utilisateur et destiné à associer un segment de bus (Bₙ) relié au répéteur à diagnostic (3),
- un champ de distance (EF) pour enregistrer la distance (lₙ) de l'utilisateur de bus (Tₙ),
- un champ de type (TF) pour caractériser le type de l'utilisateur de bus (Tₙ),
- un champ de segment de bus (BF_{R}) spécifique au répéteur et destiné à caractériser un répéteur à diagnostic (3) voisin spécifique au segment.

10. Dispositif selon l'une des revendications 7 à 9, dans lequel chaque répéteur à diagnostic (3) comporte deux dispositifs de mesure (4) pour la mesure de réflexion, un seul dispositif de mesure (4) étant associé à chaque segment de bus (Bₙ) et au moins un déclencheur de mesure (6) étant agencé sur au moins un segment de bus (Bₙ).
